(19) **Europäisches Patentamt / European Patent Office / Office européen des brevets**

(11) **EP 2 572 893 B1**

(12) **FASCICULE DE BREVET EUROPEEN**

(45) Date de publication et mention
de la délivrance du brevet:
**10.12.2014 Bulletin 2014/50**

(21) Numéro de dépôt: **12184953.3**

(22) Date de dépôt: **19.09.2012**

(51) Int Cl.:
**B42D 25/00** (2014.01)     **G07D 7/00** (2006.01)
**B32B 7/10** (2006.01)     **B32B 17/10** (2006.01)
**B32B 37/14** (2006.01)

(54) **Document sécurisé et méthode de fabrication dudit document sécurisé**

Gesichertes Dokument, und Erstellungsmethode eines solchen gesicherten Dokuments

Protected document and method for manufacturing said protected document

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.09.2011 FR 1158385**

(43) Date de publication de la demande:
**27.03.2013 Bulletin 2013/13**

(73) Titulaire: **Hologram Industries
77600 Bussy St Georges (FR)**

(72) Inventeurs:
• **Huet, Philippe
91700 Sainte Geneviève des Bois (FR)**

• **Dhome, Antoine
77600 Bussy-Saint-Georges (FR)**
• **Duriez, Christophe
94360 Bry-sur-Marne (FR)**
• **Tavernier-Lohr, Delphine
94300 Vincennes (FR)**

(74) Mandataire: **Osha Liang SARL
32, avenue de l'Opéra
75002 Paris (FR)**

(56) Documents cités:
**WO-A1-02/052104     WO-A1-2010/020054
FR-A1- 2 768 654     FR-A1- 2 793 726
FR-A1- 2 941 401**

**Description**

L'invention est relative à des documents de sécurité et à leurs méthodes de fabrication, et concerne notamment des documents de sécurité comprenant un composant optique de sécurité.

## DESCRIPTION DE L'ART ANTÉRIEUR

Généralement, les documents de sécurité, tels que les documents officiels d'identité, sont réalisés en deux temps : tout d'abord des données de personnalisation, telles que les données personnelles du porteur, sont imprimées sur le support du document de sécurité, comprenant généralement du papier, puis ces données sont protégées et sécurisées par transfert simultané de différentes couches protectrices. L'association des couches protectrices et du support du document de sécurité est réalisée, selon l'art antérieur, par laminage thermique ou pressage à chaud du document de sécurité de manière à thermocoller les couches protectrices sur le support du document de sécurité grâce à, par exemple, une colle réactivable à chaud.

Les données de personnalisation peuvent inclure des informations destinées à être lues, ou informations lisibles, qui apparaissent généralement comme une photo et du texte dans une zone d'inspection visuelle et dans une zone lisible par machine.

Pour se prémunir de contrefaçons ou de falsifications des documents de sécurité, et afin d'augmenter le niveau de sécurisation de ces documents, il est connu d'y incorporer des éléments de sécurité particuliers.

Dans lesdits documents de sécurité, les éléments de sécurité couramment employés sont des éléments de sécurité optiques. Ces éléments de sécurité optiques sont généralement des éléments optiquement variables, tels que des structures diffractives incluant les hologrammes. Ces éléments optiquement variables se présentent généralement sous forme de laminats qui comprennent une couche réfléchissante au moins partiellement transparente et une couche comprenant une microstructure diffractante et qui sont disposés de manière à recouvrir les données variables contenues dans des documents de sécurité afin de protéger ces documents notamment contre la falsification de leurs données. Ces laminats ont une double fonction, celle d'authentification du document de sécurité et celle de protection du document de sécurité contre la falsification. Les éléments de sécurité optiques doivent être suffisamment complexes pour empêcher un contrefacteur de reproduire ou de simuler l'élément de sécurité optique. L'épaisseur des couches transférées sur le laminat est inférieure à 10 $\mu$m (de préférence inférieure à 5 $\mu$m) ce qui ne confère aucune rigidité à cet ensemble qui n'est donc pas manipulable.

Les tentatives de falsification, de contrefaçon, ou de violation de documents de sécurité protégés par un laminat consistent le plus souvent à coller un film adhésif sur le laminat puis à décoller du document de sécurité l'ensemble film/laminat suite à la dissolution à l'aide d'un solvant ou à la réactivation par chauffage de l'adhésif qui maintient le laminat collé sur le document. Le falsificateur a alors la possibilité de décoller le laminat du document de sécurité sans détériorer ni le document de sécurité, ni les données de personnalisation qu'il porte, ni, surtout, le laminat. Le falsificateur peut ensuite, par exemple, falsifier les données de personnalisation du document de sécurité puis recoller le laminat dessus ou coller le laminat sur un autre document de sécurité.

Il est connu, pour empêcher cette attaque de falsification, d'incorporer dans les documents de sécurité des réactifs destinés à provoquer une réaction colorée en cas d'attaque du document de sécurité avec des solvants, notamment des solvants apolaires.

WO-A-00/71361 divulgue un procédé de protection d'un objet dans lequel on colle un mince film protecteur en matière synthétique sur une face de l'objet à l'aide d'une couche d'adhésif interposée entre ladite face et l'objet, **caractérisé en ce qu'**on interpose, entre le film et ladite face de l'objet, au moins une impression réalisée avec une composition d'encre comprenant au moins un pigment et un liant durcissable par séchage à l'air, adaptée pour former une couche d'impression solide après séchage, et incorporant au moins un agent, dit agent soluble, adapté à se dissoudre dans tout solvant liquide polaire et/ou apolaire apte à permettre le décollement de l'adhésif lorsqu'il est placé au contact de cet adhésif après le collage, la quantité d'agent soluble dans le liant étant adaptée pour que l'impression de sécurité puisse former au moins une tâche visible révélant toute tentative de décollement à l'aide d'au moins un tel solvant.

EP-A-1349987 divulgue un papier de sécurité comportant au moins une zone réagissant aux solvants apolaires, ce papier de sécurité étant caractérisé par le fait qu'il comporte une barrière imperméable aux solvants apolaires entre une première face extérieure du papier de sécurité et la zone réagissant aux solvants apolaires.

Cependant, la sécurisation des documents de sécurité selon l'art antérieur est onéreuse et présente le désavantage qu'elle doit être choisie et mise en oeuvre dès la conception des documents de sécurité.

Le document FR 2 941 401 divulgue une méthode de sécurisation d'un document de sécurité comprenant:

- la fourniture d'un document de sécurité et
- l'application d'une couche transparente au dessus du composant optique de sécurité.

**RESUME DE L'INVENTION**

Un objet de la présente invention est celui de fournir des documents de sécurité du type comprenant un support sur lequel sont inscrites des données de personnalisation, un composant optique de sécurité couvrant au moins une partie des données de personnalisation et une couche adhésive positionnée entre le support et le composant de sécurité optique, permettant d'améliorer la sécurisation des documents de sécurité en augmentant la résistance à la falsification. Dans cette perspective, le Demandeur a avantageusement trouvé que l'addition d'une couche anti-adhérente transparente, positionnée sur le composant de sécurité optique permet de remplir cet objet.

Dans la présente description et dans les revendications qui suivent, les termes "document de sécurité" sont utilisés en référence à tout document officiel d'identité, tels que par exemple un passeport, une carte d'identité, un permis de conduire, un diplôme ou à tout document, emballage ou produit portant des données de personnalisation susceptibles d'être contrefaites et nécessitant une garantie d'authenticité et/ou d'intégrité.

Dans la présente description et dans les revendications qui suivent, les termes "données de personnalisation" sont utilisés en référence à des informations contenues dans le document de sécurité destinées à être lues à l'oeil nu ou par une machine afin d'identifier et/ou d'authentifier le document de sécurité. Ces données de personnalisation peuvent être des données apparaissant sous forme de photo, de texte contenant par exemple les données biographiques du titulaire du document de sécurité, des données apparaissant sous forme de symboles ou de chiffres ou sous toute autre forme permettant d'identifier et/ou d'authentifier le document de sécurité.

Dans la présente description et dans les revendications qui suivent, le terme "surface", lorsque utilisé en référence au document de sécurité selon l'invention, fait référence à la surface du document de sécurité opposée au support du document de sécurité.

Dans la présente description et dans les revendications qui suivent, le terme "réfléchissant" est utilisé en référence à la réflexion de la lumière au moins partiellement dans le domaine du visible. Ainsi, par exemple, une couche réfléchissante est une couche pouvant réfléchir la lumière au moins partiellement dans le domaine du visible.

Dans la présente description et dans les revendications qui suivent, le terme "transparent" est utilisé en référence au passage au moins partiel de la lumière dans le domaine du visible au travers d'un milieu. Ainsi, par exemple, une couche transparente est une couche pouvant laisser passer au moins partiellement la lumière dans le domaine du visible.

Selon un premier aspect de la présente invention, ledit objet est rempli par un document de sécurité comprenant un support sur lequel sont inscrites des données de personnalisation, un composant optique de sécurité couvrant au moins une partie des données de personnalisation, une couche adhésive positionnée entre le support et le composant de sécurité optique et une couche anti-adhérente transparente, positionnée sur le composant de sécurité optique.

Le fait d'ajouter une couche anti-adhérente transparente sur le composant de sécurité optique du document de sécurité permet de rendre la surface du document de sécurité non-adhérente et d'empêcher ainsi le décollage du composant optique de sécurité par l'utilisation d'un film adhésif.

De manière avantageuse, le document de sécurité présente une résistance aux agressions mécaniques et chimiques renforcée. De plus, la porosité de la surface du document de sécurité est diminuée ce qui réduit les risques de pénétration de corps étrangers liés à la manipulation normale du document de sécurité qui pourraient produire des tâches et/ou des dégradations physico-chimiques locales.

De manière avantageuse, la surface du document de sécurité devient non imprimable. Le falsificateur ne peut donc pas tenter une falsification par impression de surface.

Selon un mode de réalisation préféré, la couche anti-adhérente couvre plus de 90% de la surface du document de sécurité. Selon un autre mode de réalisation préféré, la couche anti-adhérente forme un premier motif prédéterminé.

Avantageusement, la couche anti-adhérente présentant un premier motif prédéterminé permet de faire varier les caractéristiques surfaciques, telles que l'énergie de surface totale et la tension de pelage, à la surface du document de sécurité. Ainsi, toute tentative de falsification à l'aide d'un film adhésif conduira à l'apparition d'un motif correspondant au premier motif prédéterminé et correspondant aux zones présentant plus ou moins d'adhésion, i.e., présentant un caractère de mouillabilité plus ou moins important, avec le film adhésif du falsificateur.

De manière avantageuse, le premier motif prédéterminé est choisi de manière à ce que les forces de pelages soient inhomogènes à la surface du document de sécurité. Ainsi, la falsification du document de sécurité est rendue encore plus difficile car il n'y a pas de direction privilégiée pour décoller le film adhésif et le composant optique de sécurité à des fins de falsification.

Les éléments constitutifs du premier motif prédéterminé peuvent être par exemple des trames, des micro-lignes, des guilloches, des éléments significatifs, tels qu'un logo ou un slogan, pouvant être pleins ou uniquement dessinés par leur contour (filaire). Dans un mode de réalisation privilégié, le premier motif prédéterminé comprend des éléments constitutifs fixes ou variables. Dans un mode de réalisation préféré, les éléments constitutifs variables sont soit propres au document de sécurité, soit au porteur, soit à la série de documents de sécurité.

Selon un mode de réalisation préféré, le premier motif prédéterminé est tel qu'il permet de contrecarrer la courbure du document de sécurité après le laminage du composant optique de sécurité. En effet, le laminage du composant optique de sécurité sur le support du document de sécurité entraîne généralement la courbure du document de sécurité. Selon un mode de réalisation préféré, le premier motif prédéterminé comprend des éléments constitutifs perpendiculaires à la courbure du document de sécurité.

Selon un mode de réalisation, le document de sécurité présente une surface ayant une énergie de surface totale réduite par rapport à l'énergie de surface d'un document de sécurité selon l'art antérieur. En d'autres termes, le document de sécurité présente une surface ayant une mouillabilité réduite par rapport à la mouillabilité de la surface d'un document de sécurité selon l'art antérieur.

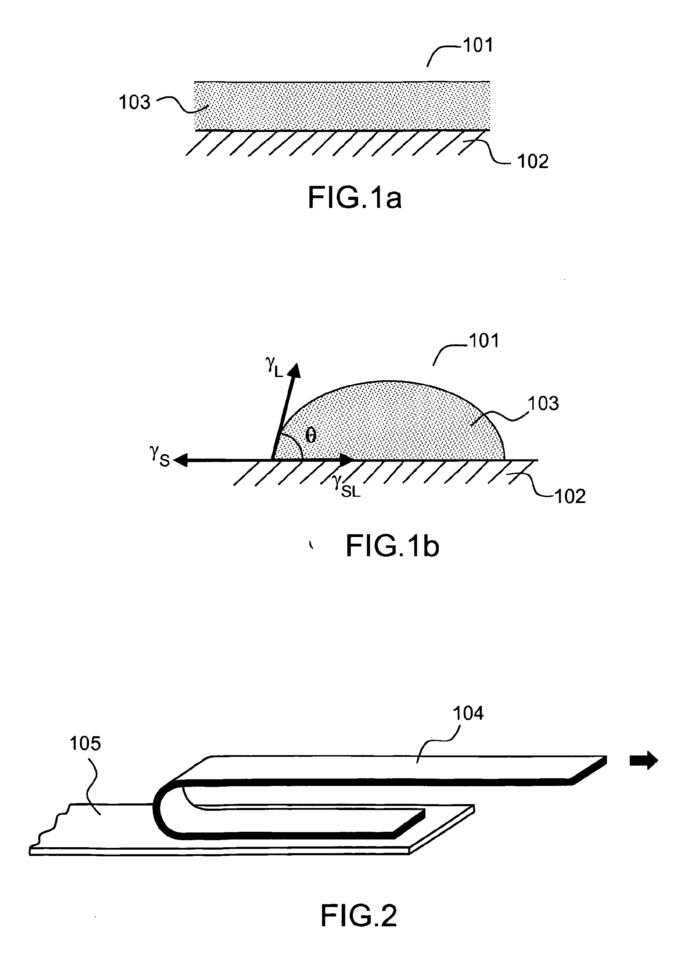

Le mouillage décrit les phénomènes physiques lorsque trois phases, dont au moins une liquide, sont mises en contact. Comme illustré dans les Figures 1a et 1b, lorsque du liquide 103 est déposé sur une surface solide 102 dans un gaz 101, soit elle s'étale complètement (Figure 1a) soit elle forme une goutte avec un angle de contact $\theta$ avec le solide (Figure 1b). Plus l'angle $\theta$ est grand, plus la mouillabilité du solide est réduite.

Dans les Figures 1a et 1b, $\gamma_s$ est la tension interfaciale entre le solide 102 et le gaz 101, $\gamma_{SL}$ est la tension interfaciale entre le solide 102 et le liquide 103 et $\gamma_L$ la tension interfaciale entre le liquide 103 et le gaz 101.

L'énergie de surface peut être mesurée par une quelconque technique adaptée connue de l'homme du métier, et par exemple par une mesure acquise grâce à un appareil de GBX Instrumentation Scientifique qui fournit des mesures selon l'approche d'Owens-Wendt. Cette approche correspond à l'équation suivante:

$$\cos\theta = -1 + 2\sqrt{\gamma_S^d}\left(\sqrt{\gamma_L^d}\Big/\gamma_L\right) + 2\sqrt{\gamma_S^{nd}}\left(\sqrt{\gamma_L^{nd}}\Big/\gamma_L\right)$$

dans laquelle $\theta$ est l'angle de contact de la goutte sur la surface, $\gamma_S^d$ et $\gamma_S^{nd}$ sont respectivement la composante dispersive et la composante non dispersive de la tension interfaciale entre le solide 102 et le gaz 101, $\gamma_L^d$ et $\gamma_L^{nd}$ sont respectivement la composante dispersive et la composante non dispersive de la tension interfaciale entre le liquide 103 et le gaz 101, et $\gamma_L$ est la tension interfaciale entre le liquide 103 et le gaz 101.

Dans un mode de réalisation préféré, la couche anti-adhérente a une énergie de surface totale moyenne inférieure à 25 mN/m, et de préférence inférieure à 20 mN/m.

Selon un mode de réalisation, le document de sécurité présente une surface ayant des caractéristiques de pelage réduite par rapport aux caractéristiques de pelage de la surface d'un document de sécurité selon l'art antérieur. En d'autres termes, la surface du document de sécurité selon l'invention a une force de pelage moyenne réduite par rapport à la force de pelage moyenne de la surface d'un document de sécurité selon l'art antérieur.

La force de pelage peut être mesurée par une quelconque technique adaptée connue de l'homme du métier, et par exemple, par une mesure, illustrée dans la Figure 2, selon une adaptation de la norme FINAT FTM 1 dans laquelle la force de pelage est la force nécessaire pour retirer une bande d'un matériau adhésif de test standard 104, qui a été appliquée à l'échantillon 105, de l'échantillon à un angle de 90° et à une vitesse de 1000 mm par minute (représentée par la flèche sur la Figure 2). Pour effectuer cette mesure, le matériau adhésif de test standard est une bande adhésive 3M référencée 3M-VHB et est contrecollé sur une feuille de polyester d'une épaisseur de 36 $\mu$m, la bande de matériau adhésif a une largeur de 20 mm et le document de sécurité échantillon a une largeur de 85 mm.

Dans un mode de réalisation préféré, la couche anti-adhérente a une force de pelage moyenne inférieure à 1 N et de préférence inférieure à 500 mN.

Dans un mode de réalisation préféré, la couche anti-adhérente a une épaisseur moyenne inférieure à 5 $\mu$m, et de préférence entre 1 et 2 $\mu$m.

Dans un mode de réalisation, la couche anti-adhérente comprend au moins une résine réticulable, un agent initiateur de réticulation, et un agent glissant.

Dans un mode de réalisation préféré, la résine réticulable comprend l'un au moins d'une résine polyester, une résine époxy, une résine polyéther, une résine polyol, une résine polyuréthane, ou une résine acrylique. Dans un mode de réalisation préféré, la résine réticulable est réticulable aux UV.

L'agent initiateur de réticulation est capable d'initier une réaction de réticulation de la résine réticulable. Dans un mode de réalisation préféré, l'agent initiateur de réticulation est un agent photo-initiateur ou un agent thermo-initiateur. Dans un mode de réalisation préféré, l'agent photo-initiateur est radicalaire ou ionique. Dans un mode de réalisation préféré, l'agent photo-initiateur est choisi parmi les dérivés de benzophénone, les cétones, les dérivés phosphorés, et les dérivés soufrés.

Dans un mode de réalisation préféré, l'agent glissant comprend l'un au moins d'un silicone réactif ou d'une cire.

Dans un mode de réalisation préféré, la couche anti-adhérente comprend en outre un solvant mono ou poly fonctionnel et réticulable. Dans un mode de réalisation préféré, le solvant est réticulable aux UV.

Selon un mode de réalisation préféré, la couche anti-adhérente est réticulée. De manière avantageuse, cette réticulation empêche la dissolution ultérieure de la couche anti-adhérente à des fins malveillantes par des falsificateurs.

Dans un mode de réalisation préféré, la couche anti-adhérente comprend en outre un marqueur physico-chimique non visible à l'oeil nu mais pouvant être révélé grâce un outil adapté, tel qu'un spectromètre, ou grâce à une lumière spécifique. Avantageusement, l'ajout d'un marqueur physico-chimique permet de renforcer la sécurisation du document de sécurité.

Selon un mode de réalisation, la couche anti-adhérente comprend un matériau tel que la surface du document de sécurité diffuse au moins partiellement la lumière. Selon un mode de réalisation préféré, la couche anti-adhérente comprend un matériau tel que la surface du document de sécurité est au moins partiellement mate. Avantageusement, une telle couche anti-adhérente permet de doter le document de sécurité selon l'invention d'une marque distinctive à la surface du document de sécurité, renforçant ainsi sa sécurisation.

Le support comprend tout matériau adapté connu de l'homme du métier. Dans un mode de réalisation préféré, le support comprend l'un au moins du papier naturel, du papier synthétique, d'un matériau plastique. Dans un mode de réalisation préféré, le support est un support multicouche, chaque couche comprenant l'un au moins du papier naturel, du papier synthétique, d'un matériau plastique. De préférence, le matériau plastique comprend au moins l'un du polycarbonate, polyéthylène, polychlorure de vinyle, ABS (acrylonitrile butadiène styrène), polystyrène, PEC, polyéthylène téréphtalate ou une combinaison de ces matériaux.

Dans un mode de réalisation préféré, le support a une épaisseur moyenne comprise entre 50 et 500 $\mu$m, et de préférence entre 80 et 120 $\mu$m.

Le composant optique de sécurité peut comprendre tout élément optique de sécurité adapté et connu de l'homme du métier. Dans un mode de réalisation préféré, le composant optique de sécurité comprend au moins un élément optiquement variable, de préférence au moins une structure diffractive. Dans un mode de réalisation préféré, le composant optique de sécurité comprend au moins un hologramme.

Selon un mode de réalisation préféré, le composant optique de sécurité couvre au moins une partie des données de personnalisation, et de préférence l'ensemble des données de personnalisation.

Selon un mode de réalisation préféré, le composant optique de sécurité couvre la totalité du support. Selon un autre mode de réalisation préféré, le composant optique de sécurité forme un second motif prédéterminé couvrant au moins une partie des données de personnalisation.

Selon un mode de réalisation préféré, le composant optique a une épaisseur moyenne comprise entre 2 et 100 $\mu$m, et de préférence entre 4 et 40 $\mu$m.

Dans un mode de réalisation préféré, le second motif prédéterminé est continu. Dans un autre mode de réalisation préféré, le second motif prédéterminé est discontinu.

Dans un mode de réalisation préféré, le composant optique de sécurité comprend une couche réfléchissante transparente, positionnée sur la couche adhésive du document de sécurité et une couche comprenant au moins un élément optique de sécurité et positionnée sur la couche réfléchissante.

Dans un mode de réalisation préféré, la couche réfléchissante a une épaisseur moyenne comprise entre 5 et 500 nm, de préférence entre 5 et 250 nm et de préférence entre 10 et 100 nm.

Selon un mode de réalisation préféré, la couche réfléchissante comprend au moins un composant ayant un fort indice de réfraction, par exemple supérieur à 2. Dans un mode de réalisation préféré, la couche réfléchissante comprend au moins un composant choisi parmi le sulfure de zinc, le dioxyde de titane, ou l'oxyde de zirconium.

Dans un mode de réalisation préféré, la couche comprenant au moins un élément optique de sécurité a une épaisseur moyenne inférieure ou égale à 10 $\mu$m, et de préférence comprise entre 2 et 10 $\mu$m.

Selon un mode de réalisation préféré, la couche comprenant au moins un élément optique de sécurité comprend un vernis thermoformable. Dans un autre mode de réalisation préféré, la couche comprenant au moins un élément optique de sécurité comprend au moins un vernis acrylique.

Dans un mode de réalisation préféré, l'élément optique de sécurité est une structure diffusante ou une structure diffractante ou une combinaison de différents types de structure.

Dans un autre mode de réalisation préféré, le composant optique de sécurité peut comprendre en outre au moins une couche de protection positionnée sur la couche comportant au moins un élément optique de sécurité.

La couche de protection permet de protéger le document de sécurité contre au moins l'un de la salissure, des rayures, des attaques chimiques. Dans un mode de réalisation préféré, la couche de protection comprend un vernis polymère. Dans un mode de réalisation préféré, la couche de protection a une épaisseur comprise entre 0.1 et 1.5 $\mu$m, de préférence entre 0.2 et 0.5 $\mu$m.

La couche adhésive permet de souder le support et le composant optique de sécurité entre eux et comprend tout matériau adapté connu de l'homme du métier. Dans un mode de réalisation préféré, la couche adhésive comprend au moins un adhésif thermoactivable.

Dans un mode de réalisation préféré, la couche adhésive comprend des polymères ayant un point de fusion compris entre 40°C et 200°C, de préférence un adhésif à base de copolymère acrylique en dispersion aqueuse ou solvant. Dans un mode de réalisation préféré, la couche adhésive comprend l'un au moins d'une résine acrylique, d'un polyacétate de vinyle, d'une résine thermoplastique vinylique, d'une colle comprenant un copolymère en dispersion aqueuse ou solvant, d'un époxy, d'un polyester, ou une combinaison de ces matériaux ou de matériaux présentant des caractéristiques similaires.

Dans un mode de réalisation préféré, la couche adhésive a une épaisseur moyenne comprise entre 2 et 25 $\mu$m, de préférence entre 4 et 10 $\mu$m.

Dans un mode de réalisation préféré, la couche adhésive comprend des adhésifs thermo-réactivables nécessitant une post-réticulation.

Un autre aspect de la présente invention concerne une méthode de sécurisation d'un document de sécurité comprenant la fourniture d'un document de sécurité à sécuriser comprenant un support sur lequel sont inscrites des données de personnalisation, un composant optique de sécurité couvrant au moins une partie des données de personnalisation et une couche adhésive positionnée entre le support et le composant de sécurité optique, et l'application d'une couche anti-adhérente transparente sur le composant optique de sécurité.

Selon l'art antérieur, la méthode de fabrication d'un document de sécurité comprend la préparation d'un composant optique de sécurité sous la forme d'un laminat sur un film séparable, l'inscription des données de personnalisation sur le support du document de sécurité, le laminage du composant optique de sécurité sur le support du document de sécurité, puis le retrait du film séparable de manière à transférer uniquement le laminat sur le document de sécurité. La préparation du composant optique de sécurité comprend, de manière générale, l'application d'une couche estampable sur le film séparable, l'estampage de la couche estampable afin d'y intégrer un élément optique de sécurité, l'application d'une couche réfléchissante transparente sur la couche estampée, puis l'application d'une couche adhésive sur la couche réfléchissante.

Ainsi, selon l'art antérieur, le laminage du composant optique de sécurité est l'étape finale de la préparation d'un document de sécurité. Une couche anti-adhérente ne peut pas être introduite dans la structure du composant optique de sécurité car elle provoquerait des décollements intempestifs lors du procédé d'estampage du composant optique de sécurité.

De manière avantageuse, la méthode selon l'invention permet l'introduction de la couche anti-adhérente dans le document de sécurité postérieurement au laminage du composant optique de sécurité sur le support du document de sécurité. Cette méthode peut donc être implémentée sur n'importe quel document de sécurité et à n'importe quel moment de la vie du document de sécurité, par exemple soit à l'issue de sa fabrication, soit sur un document de sécurité déjà en circulation.

La méthode de sécurisation d'un document de sécurité selon invention comprend des étapes préférées qui sont exécutées afin d'obtenir un document de sécurité selon un ou plusieurs modes de réalisation préférés décrits ci-dessus.

Le document de sécurité à sécuriser est fabriqué par une quelconque technique adaptée connue de l'homme du métier.

Dans un mode de réalisation préféré, la couche anti-adhérente est appliquée selon un premier motif prédéterminé.

La couche anti-adhérente est appliquée sur le composant optique de sécurité par une quelconque technique adaptée connue de l'homme du métier. Selon un mode de réalisation préféré, la couche anti-adhérente est appliquée sur le composant optique de sécurité par pulvérisation, impression, ou tampographie. Dans un mode de réalisation préféré, la couche anti-adhérente est imprimée par impression à jet d'encre ou par sérigraphie.

Avantageusement, l'application de la couche anti-adhérente sur le document de sécurité par impression permet de réaliser une application à haute résolution. De manière avantageuse, l'impression de la couche anti-adhérente par sérigraphie permet un fort dépôt d'encre. De manière avantageuse, l'impression de la couche anti-adhérente par une impression à jet d'encre permet d'appliquer la couche anti-adhérente selon un motif personnalisable.

Selon un mode de réalisation préféré, l'application de la couche anti-adhérente comprend en outre une étape de réticulation de la couche anti-adhérente. Avantageusement, cette étape, qui permet d'initier la réticulation de la couche anti-adhérente, permet d'interdire la dissolution ultérieure de la couche anti-adhérente à des fins malveillantes.

Selon un mode de réalisation préféré, l'application de la couche anti-adhérente comprend en outre une étape de séchage de la couche anti-adhérente.

Selon un mode de réalisation préféré, la réticulation et/ou le séchage sont réalisés sous UV.

Dans un mode de réalisation préféré, la couche adhésive comprend des adhésifs thermo-réactivables nécessitant une post-réticulation. Dans un mode de réalisation préféré, la réticulation de la couche adhésive est réalisée en même temps que la réticulation de la couche anti-adhérente.

Dans un mode de réalisation préféré, la couche anti-adhérente comprend en outre un solvant mono ou poly fonctionnel et réticulable. Dans un mode de réalisation préféré, le solvant est réticulable aux UV, de préférence par la même source d'UV que la résine réticulable de la couche anti-adhérente.

## BRÈVE DESCRIPTION DES DESSINS

L'invention va maintenant être décrite en référence aux dessins annexés dans lesquels les Figures ne sont pas à l'échelle et les dimensions de certains éléments sont agrandies à des fins illustratives, et dans lesquels

- les Figures 1a et 1b illustrent le principe de mouillage; la Figure 1a illustre le cas d'une mouillabilité élevée et la Figure 1b illustre le cas d'une mouillabilité faible,
- la Figure 2 illustre la mesure de la force de pelage du document de sécurité selon l'invention,
- la Figure 3 représente une vue éclatée en coupe transversale du document de sécurité selon un mode de réalisation de la présente invention,
- la Figure 4 représente une vue éclatée en coupe transversale du document de sécurité selon un autre mode de réalisation de la présente invention,
- la Figure 5 représente une vue éclatée en coupe transversale du document de sécurité selon un autre mode de réalisation de la présente invention,
- la Figure 6a représente schématiquement la courbure d'un document de sécurité de l'art antérieur; la Figure 6b représente une vue de dessus d'un document de sécurité selon un mode de réalisation de la présente invention; la Figure 6c représente une vue de dessus d'un document de sécurité selon un autre mode de réalisation de la présente invention,
- la Figure 7 représente schématiquement la méthode selon un mode de réalisation de la présente invention, et
- la Figure 8 représente schématiquement la méthode selon un autre mode de réalisation de la présente invention.

## DESCRIPTION DÉTAILLÉE DE MODES DE REALISATION PRÉFÉRÉS

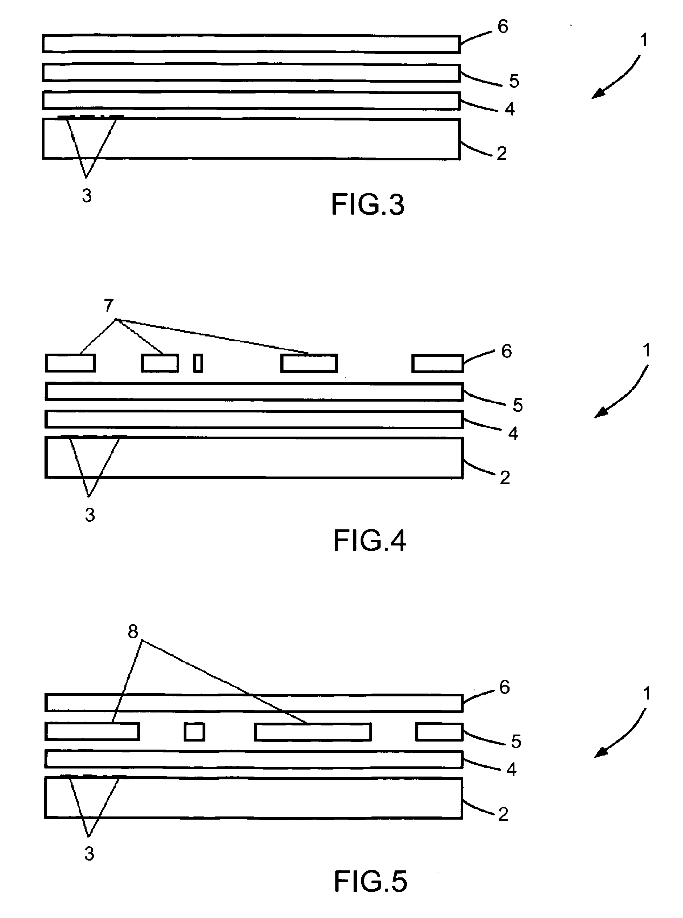

La Figure 3 illustre les couches d'un document de sécurité 1, par exemple une page d'un passeport, dans une vue éclatée transversale, pour plus de clarté, selon un mode de réalisation de la présente invention.

Le document de sécurité 1 comprend un support 2 sur lequel sont inscrites des données de personnalisation 3, une couche adhésive 4, un composant de sécurité optique 5 et une couche anti-adhérente 6.

La Figure 4 illustre le document de sécurité 1 dans une vue transversale selon un autre mode de réalisation de la présente invention.

Le document de sécurité 1 comprend un support 2 sur lequel sont inscrites des données de personnalisation 3, une couche adhésive 4, un composant de sécurité optique 5 et une couche anti-adhérente 6. La couche anti-adhérente 6 forme un premier motif prédéterminé 7.

La Figure 5 illustre le document de sécurité 1 dans une vue transversale selon encore un autre mode de réalisation de la présente invention.

Le document de sécurité 1 comprend un support 2 sur lequel sont inscrites des données de personnalisation 3, une couche adhésive 4, un composant de sécurité optique 5 et une couche anti-adhérente 6. Le composant optique de sécurité 5 forme un second motif prédéterminé 8.

Par exemple, le support 2 a un grammage de 80 g/m$^2$ et est constitué de 50% de coton et de 50% de bois. L'épaisseur moyenne du support 2 est comprise entre 80 et 120 $\mu$m. Le composant optique de sécurité 5 comprend une couche de ZnS estampée d'une structure diffractante et a une épaisseur moyenne de 4 $\mu$m. La couche adhésive 4 a une épaisseur moyenne de 10 $\mu$m.

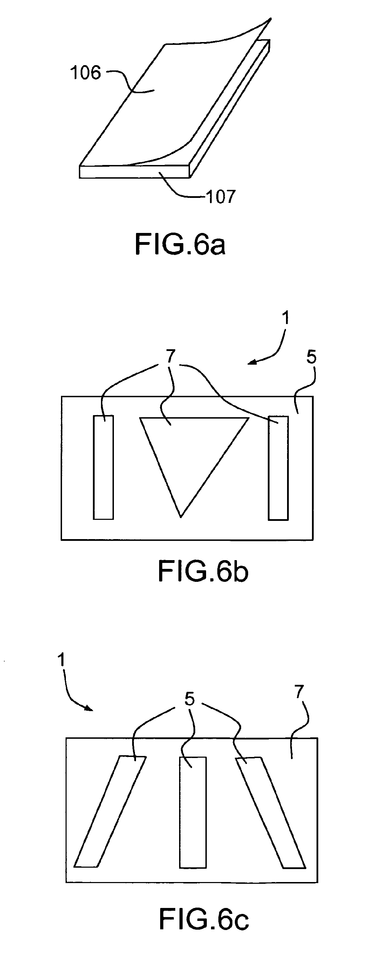

Selon l'art antérieur illustré dans la Figure 6a, le laminage d'un composant optique de sécurité sur le support d'une page de passeport 106 entraîne généralement la courbure de la page de passeport 106 par rapport au reste du passeport 107.

La Figure 6b illustre une possibilité de premier motif prédéterminé 7 permettant de contrecarrer la courbure de la page de passeport après le laminage du composant optique de sécurité sur la page de passeport 1. Dans cet exemple, le premier motif prédéterminé 7 est constitué de trois éléments pleins de formes différentes.

La Figure 6c illustre une autre possibilité de premier motif prédéterminé 7 permettant de contrecarrer la courbure de la page de passeport 1 après le laminage du composant optique de sécurité sur la page de passeport 1. Dans cet exemple, le premier motif prédéterminé 7 est constitué d'une couche évidée à trois endroits.

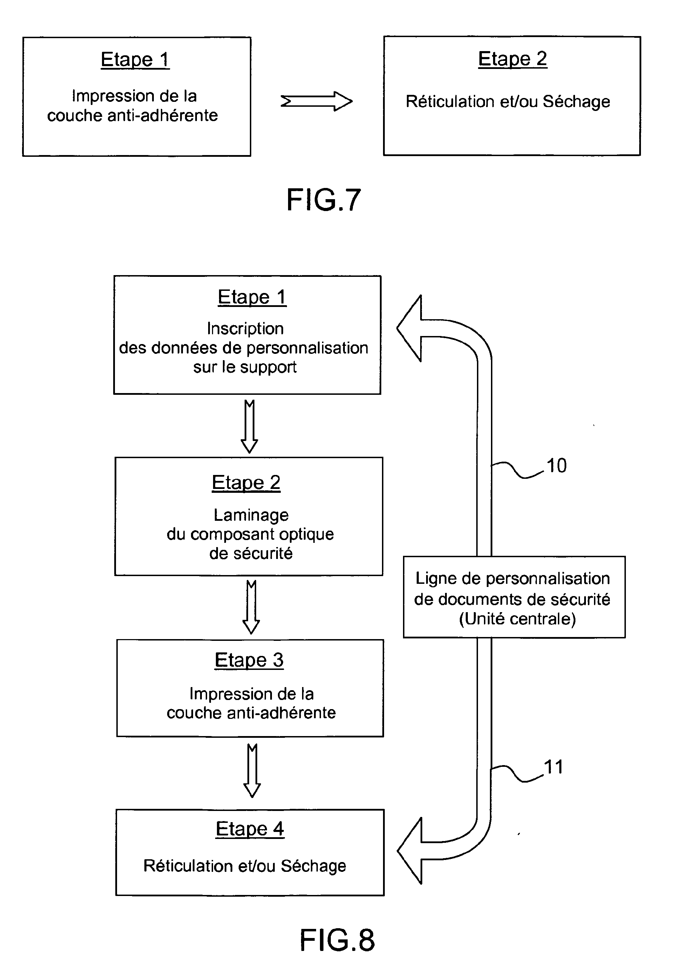

La méthode de sécurisation du document de sécurité 1 est décrite en référence aux Figures 7 et 8.

Dans la Figure 7, selon un mode de réalisation de l'invention, la méthode de sécurisation du document de sécurité est implémentée dans une unité venant en complément d'une ligne de fabrication existante. La méthode comprend tout d'abord l'étape 1 d'impression, sur le composant optique de sécurité, de la couche anti-adhérente. L'impression peut être faite selon un premier motif prédéterminé. La méthode comprend ensuite l'étape 2 de réticulation et/ou séchage de la couche anti-adhérente.

Par exemple, la réticulation est réalisée à l'aide d'une lampe UV d'une puissance de 130 W telle qu'une lampe à Mercure émettant des UVA, UVB et UVC. L'énergie de réticulation est par exemple d'environ 500mJ/cm$^2$ dans l'UVB.

Dans la Figure 8, selon un autre mode de réalisation de la présente invention, la méthode de sécurisation de document de sécurité est implémentée dans un centre de personnalisation de documents de sécurité. Ce centre de personnalisation met en oeuvre les étapes 1 et 2 d'inscription des données de personnalisation sur le support du document de sécurité et de laminage du composant optique de sécurité. La méthode de sécurisation selon la présente invention vient s'insérer dans ce procédé et comprend les étapes 3 et 4 d'impression de la couche anti-adhérente et de réticulation et/ou séchage de la couche anti-adhérente. Les flèches 10 et 11 indiquent le flux d'information de l'unité centrale vers les postes d'inscription et d'impression (Etapes 1 et 3).

EXEMPLES

La force de pelage d'un document de sécurité selon l'invention et d'un document de sécurité selon l'art antérieur sans la couche anti-adhérente a été mesurée.

Le document de sécurité selon l'art antérieur comprend un support ayant un grammage de 80 g/m$^2$ et constitué de 50% de coton et de 50% de bois, un composant optique de sécurité et une couche anti adhérente comprenant un silicone réactif, un agent photo-initiateur cationique et une résine réticulable aux UV.

La méthode de mesure utilisée est illustrée dans la Figure 2. Une bande d'un matériau adhésif de test standard 104, soit une bande adhésive 3M référencée 3M-VHB, d'une largeur de 20 mm et contrecollée sur une feuille de polyester d'une épaisseur de 36 $\mu$m, a été appliquée aux échantillons 105 d'une largeur de 85 mm. La bande 104 a été retirée des échantillons 105 à un angle de 90° et à une vitesse de 1000 mm par minute (représentée par la flèche sur la Figure 2).

La force de pelage moyenne mesurée pour un document de sécurité de l'art antérieur sans couche anti-adhérente est de 20 N et l'adhésion du matériau adhésif de test standard sur le document de sécurité est telle qu'une rupture cohésive du papier, qui se défibre, est obtenue.

La force de pelage moyenne mesurée pour un document de sécurité selon l'invention ayant une couche anti-adhérente comprenant est de 0,5 mN.

En parallèle, des mesures d'énergie de surface totale moyenne à la surface du document de sécurité selon l'invention et du document de sécurité selon l'art antérieur ont été réalisées.

L'énergie de surface totale moyenne mesurée à la surface du document de sécurité selon l'invention est d'environ 17,9 mN/m alors que l'énergie de surface totale moyenne mesurée à la surface du document de sécurité selon l'art antérieur est de 47,9 mN/m.

L'invention ainsi décrite présente entre autre l'avantage suivant.

Les documents de sécurité selon l'invention permettent d'empêcher leur falsification par décollement du laminat de sécurité à l'aide d'un film adhésif. Les méthodes de sécurisation de documents de sécurité selon l'invention sont implémentables à tout moment de la vie des documents de sécurité ainsi que sur une ligne de personnalisation de documents de sécurité existante sans nécessiter d'apporter des modifications au composant optique de sécurité et/ou au document de sécurité et donc indépendamment du fournisseur dudit composant optique de sécurité et/ou dudit document de sécurité.

**Revendications**

1. Méthode de sécurisation d'un document de sécurité (1) comprenant:

   - la fourniture d'un document de sécurité à sécuriser comprenant un support (2) sur lequel sont inscrites des données de personnalisation (3), un composant optique de sécurité (5) couvrant au moins une partie des données de personnalisation (3) et une couche adhésive (4) positionnée entre le support (2) et le composant de sécurité optique (5); et
   - l'application d'une couche anti-adhérente (6) transparente sur le composant optique de sécurité (5).

2. Méthode selon la revendication 1, dans laquelle la couche anti-adhérente (6) est appliquée selon un premier motif prédéterminé (7).

3. Méthode selon l'une quelconque des revendications précédentes, dans laquelle la couche anti-adhérente (6) est imprimée sur le composant optique de sécurité (5).

4. Méthode selon la revendication 3, dans laquelle l'impression est sérigraphique ou à jet d'encre.

5. Méthode selon l'une quelconque des revendications précédentes, dans laquelle l'application comprend en outre la réticulation de la couche anti-adhérente (6).

**6.** Méthode selon l'une quelconque des revendications précédentes, dans laquelle l'application comprend en outre le séchage de la couche anti-adhérente (6).

**7.** Méthode selon la revendication 5 ou la revendication 6, dans laquelle la réticulation et/ou le séchage de la couche anti-adhérente (6) sont réalisés sous UV.

**8.** Document de sécurité (1) comprenant:

- un support (2) sur lequel sont inscrites des données de personnalisation (3);
- un composant optique de sécurité (5) couvrant au moins une partie des données de personnalisation (3);
- une couche adhésive (4) positionnée entre le support (2) et le composant de sécurité optique (5); et
- une couche anti-adhérente (6) transparente, positionnée sur le composant de sécurité optique (5) et formant un premier motif prédéterminé (7).

**9.** Document de sécurité (1) selon la revendication 8, dans lequel la couche anti-adhérente (6) a une énergie de surface totale moyenne inférieure à 25 mN/m.

**10.** Document de sécurité (1) selon les revendications 8 à 9, dans lequel la couche anti-adhérente (6) a une force de pelage moyenne inférieure à 1 N.

**Patentansprüche**

**1.** Verfahren zur Sicherung eines Sicherheitsdokuments (1), wobei das Verfahren Folgendes umfasst:

- Bereitstellen eines zu sichernden Sicherheitsdokuments, das einen Träger (2), auf den Personalisierungsdaten (3) eingeschrieben sind, eine optische Sicherheitskomponente (5), die mindestens einen Teil der Personalisierungsdaten (3) abdeckt, und eine Klebeschicht (4) umfasst, die zwischen dem Träger (2) und der optischen Sicherheitskomponente (5) angeordnet ist; und
- Aufbringen einer transparenten Antihaftschicht (6) auf die optische Sicherheitskomponente (5).

**2.** Verfahren nach Anspruch 1, wobei die Antihaftschicht (6) gemäß einem vorher festgelegten ersten Muster (7) aufgebracht wird.

**3.** Verfahren nach einem der vorhergehenden Ansprüche, wobei die Antihaftschicht (6) auf die optische Sicherheitskomponente (5) gedruckt wird.

**4.** Verfahren nach Anspruch 3, wobei es sich bei dem Drucken um Siebdruck oder Tintenstrahldruck handelt.

**5.** Verfahren nach einem der vorhergehenden Ansprüche, wobei das Aufbringen außerdem das Vernetzen der Antihaftschicht (6) umfasst.

**6.** Verfahren nach einem der vorhergehenden Ansprüche, wobei das Aufbringen außerdem das Trocknen der Antihaftschicht (6) umfasst.

**7.** Verfahren nach Anspruch 5 oder 6, wobei das Vernetzen und/oder das Trocknen der Antihaftschicht (6) unter UV durchgeführt werden.

**8.** Sicherheitsdokument (1), das Folgendes umfasst:

- einen Träger (2), auf den Personalisierungsdaten (3) eingeschrieben sind;
- eine optische Sicherheitskomponente (5), die mindestens einen Teil der Personalisierungsdaten (3) abdeckt;
- eine Klebeschicht (4), die zwischen dem Träger (2) und der optischen Sicherheitskomponente (5) angeordnet ist; und
- eine transparente Antihaftschicht (6), die auf der optischen Sicherheitskomponente (5) angeordnet ist und ein vorher festgelegtes erstes Muster (7) bildet.

**9.** Sicherheitsdokument (1) nach Anspruch 8, wobei die Antihaftschicht (6) eine mittlere Gesamtoberflächen-energie von weniger als 25 mN/m aufweist.

10. Sicherheitsdokument (1) nach den Ansprüchen 8 bis 9, wobei die Antihaftschicht (6) eine mittlere Schälkraft von weniger als 1 N aufweist.


**Claims**

1. A method of securement of a security document (1) comprising:

   - providing a security document to be secured comprising a support (2) on which are inscribed personalization data (3), an optical security component (5) covering at least a portion of the personalization data (3) and an adhesive layer (4) positioned between the support (2) and the optical security component (5); and
   - applying a transparent anti-adhesive layer (6) on the optical security component (5).

2. The method according to claim 1, wherein the anti-adhesive layer (6) is applied according to a first predetermined pattern (7).

3. The method according to any one of the preceding claims, wherein the anti-adhesive layer (6) is printed on the optical security component (5).

4. The method according to claim 3, wherein the printing is a screen printing or by ink jet.

5. The method according to any one of the preceding claims, wherein the application further comprises the crosslinking of the anti-adhesive layer (6).

6. The method according to any one of the preceding claims, wherein the application further comprises the drying of the anti-adhesive layer (6).

7. The method according to claim 5 or 6, wherein the crosslinking and/or drying of the anti-adhesive layer (6) are carried out with UVs.

8. A security document (1) comprising:

   - a support (2) on which are inscribed personalization data (3);
   - an optical security component (5) covering at least a portion of the personalization data (3);
   - an adhesive layer (4) positioned between the support (2) and the optical security component (5); and
   - a transparent anti-adhesive layer (6), positioned on the optical security component (5) and forming a first predetermined pattern (7).

9. The security document (1) according to claim 8, wherein the anti-adhesive layer (6) has an average total surface energy of less than 25 mN/m.

10. The security document (1) according to claims 8 to 9, wherein the anti-adhesive layer (6) has an average peeling force of less than 1 N.

FIG.1a

FIG.1b

FIG.2

FIG.3

FIG.4

FIG.5

FIG.6a

FIG.6b

FIG.6c

**Etape 1**

Impression de la
couche anti-adhérente

$\Longrightarrow$

**Etape 2**

Réticulation et/ou Séchage

## FIG.7

**Etape 1**

Inscription
des données de personnalisation
sur le support

**Etape 2**

Laminage
du composant optique
de sécurité

**Etape 3**

Impression de la
couche anti-adhérente

**Etape 4**

Réticulation et/ou Séchage

Ligne de personnalisation
de documents de sécurité
(Unité centrale)

10

11

## FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0071361 A
- EP 1349987 A
- FR 2941401